# EUROPEAN PATENT APPLICATION

(11) **EP 2 000 968 A1**
(43) Date of publication of application: **10.12.2008**
(21) Application number: 07290692.8
(22) Date of filing: 04.06.2007
(51) Int. Cl.: G06Q 30/00

(54) **Method, system and computer readable medium for providing recommendations to a group**

(71) Applicant: Motorola, Inc., Schaumburg, IL 60196 (US)
(72) Inventor: Lhuillier, Nicholas, 78000 Versailles (FR); Bouzid, Makram, 91120 Palaiseau (FR); Picault, Jerome, 75014 Paris (FR)
(74) Representative: McLeish, Nicholas Alistair Maxwell

(57) **Abstract**

A method and system for providing recommendations to a group is disclosed. The method includes generating individual recommendations for a set of users of the group by comparing the preferences of each user with a set of stored preferences. The method also includes combining the individual recommendations generated for each user into an ordered structure. Further, the method includes selecting one or more recommendations from the ordered structure, based on a set of criteria, and evaluating the one or more recommendations for a first part of the set of users. The content of each of the one or more recommendations is compared with the content of the preferences of each user of the first part, such that the one or more recommendations are common to a second part of the set of users. The method also includes offering at least one recommendation from the one or more recommendations to the set of users.

## Description

### FIELD OF THE INVENTION

The described method, system and computer readable medium relate to the field of recommendation services. More specifically, they relate to a method, system and computer readable medium for providing recommendations to a group of individuals.

### BACKGROUND OF THE INVENTION

In consuming goods and services, many vendors offer individual users recommendations of similar goods and services to purchase. As an example, if an individual purchases a music CD or file from a Web-based vendor, that vendor may recommend other music CDs or files it thinks that individual may like and therefore purchase. Recommendations can also be given for other goods and services such as restaurants, movies being shown in theaters and video content received at an individual's home via a cable or satellite network.

One algorithm used to make recommendations is generally called content matching. This method involves comparing metadata about a good or service to be recommended against an individual's preferences. In this algorithm, an individual's preferences are established by either having him or her manually enter what he or she prefers or by building a database over time based on what that individual has purchased or consumed in the past. Either way, the individual's preferences are used to search against a database of metadata and select the goods or services that have metadata describing those goods or services that most closely matches the individual's preferences. As an example, if the individual's preference profile indicates he or she likes action movies, the content matching algorithm will search through a database of movies looking for those movies that have the metadata "action," or some equivalent, associated with them. Those that do are recommended to that individual.

Some drawbacks to this type of recommendation algorithm include an inability to rank the recommendations. That is, a large assortment of action movies may be recommended to a user. Thus, the individual gets a list that will include very good action movies as well as very bad action movies. In addition, this method requires that a database of metadata be created and maintained both about the user and available goods or services. To a certain extent, determining how to describe a good or services is somewhat subjective (e.g., a movie could be a comedy movie with some scenes of action in it, that movie may or may not be associated with any metadata that might indicate it is an action movie.) Thus, collecting accurate metadata about a certain good or service is sometimes difficult.

Another algorithm uses collaborative filtering. In this system, an individual rates a group of popular goods and/or services. Each rating for each good or service from each individual is a profile point. All of the ratings given by an individual are called a ratings profile. A database is then compiled of a plurality of these ratings profiles from each user. As one individual shops or searches for new items, a search of other rating profiles of other users is done in the database. Those other rating profiles that most closely match this individual's rating profile are then combined. In one example, the combination is done by calculating a weighted sum for each profile point. The system then recommends to the individual those goods and services that were rated very highly by the group of other users but have not yet been rated by this particular individual user.

The collaborative filtering method also suffers from some drawbacks. For instance, each user must at some point give a subjective rating of a bought or consumed good or service. If most users don't do this, the database of ratings profiles cannot be built. In addition, there is an implied correlation between the different ratings points. As an oversimplified example, an individual may rate magazine X and action movie Y very highly. The collaborative filter may return recommendations to buy music CDs from artist Z where the individual user may not like artist Z. In this example, the recommendations have failed because the correlation between magazine X, action movie Y and CDs from artist Z is not very strong.

In addition to these drawbacks, these systems are designed for providing recommendations to individuals and not a group of individuals. As described above, each individual either builds a database of preferences or has his individual ratings compared against a database of other's ratings.

One way to provide recommendations to groups is to create a pseudo-user. This pseudo-user is an amalgamation of the users' preferences. The generated pseudo-user preferences are then used in the content matching algorithm described above to search through metadata and make recommendations to the group. This system also suffers from some drawbacks. For one, individual preferences are often varied and disparate. It is therefore difficult to combine all of these different preferences into one set for the pseudo-user. In addition, a threshold system may be needed to eliminate fringe preferences. In other words, one oddball in the group should not have great influence on what constitutes the pseudo-user's preferences and his preferences should be discounted. Finally, there is a social context to providing a group rating that is not taken into account in this system. To be more specific, a user may have different preferences when in a group. For example, an individual may prefer horror movies when he is by himself. However, when the user is in a group of people that includes people who dislike horror movies, that user might prefer to watch an action movie over a horror movie when in the group so as to not influence the movie selection process towards a horror movie that the user knows other individuals won't enjoy. This social context cannot be taken into account because that one user's preferences will push the group decision towards horror movies.

Another way to provide recommendations to a group of users is to merge the ratings profiles from the individuals. This merged ratings profile is then processed using a collaborative filter. One drawback to this system is that the individual with the fewest ratings in his profile will tend to drive the results. This is because the system will try to return recommendations that should appeal to all individuals in the group, including the user with the fewer ratings. Thus the group results will be skewed to finding a recommendation that also matches to the user with the small sample set of ratings. This in turn means recommendations will be made to the group that will try to work for this one user.

To compensate for this shortcoming, a solution has been proposed that uses a combination of content matching for a group of individuals first and then taking those results and inputting them into a collaborative filter. This approach augments the ratings for those users that have only a few by generating additional ratings using a content matching algorithm. In other words, a user that may have only a few ratings listed for a few goods or services has his ratings profile expanded by performing a content matching algorithm first. Thus, additional ratings points are added to the ratings profile based on the results from the content matching algorithm. Once all of the users are substantially evened-out in their respective number of ratings, the system then takes these expanded ratings profiles from all of the users in the group and combines them. Recommendations are then made for the entire group using a collaborative filter.

While this solution does have its benefits, it also has some drawbacks. For instance, the reliability of the collaborative filtering part of the system is degraded due to the additional content matching data added. That is, just because a user tends to rank horror movies very highly, does not mean he would rank a particular horror movie very highly. Yet, the content matching may add a high rating for this particular movie to the user's profile and thus cause the collaborative filter portion to rely on less accurate data. In addition, the process requires additional processing time and/or power. This is generally true if the number of users is quite large and the number of items to use in the content comparison is quite large. As an example, this process may perform content matching for a particular user in a genre or area that is not relative to the recommendation search needed. Thus, resources are wasted on content searching in areas that are not needed.

### BRIEF DESCRIPTION OF THE DRAWINGS

The accompanying figures, where like reference numerals refer to identical or functionally similar elements throughout the separate views.

FIG. 1 is a block diagram of a system that allows a group of users to receive recommendations;

FIG. 2 is another block diagram of the system shown in FIG. 1.

FIG. 3 is a flow chart for a method for recommending items to a group of users.

FIG. 4 is a diagram of ratings profiles for a group of users.

FIG. 5 is a data structure created during the process shown in FIG. 4.

FIG. 6 is a modified data structure created during the process shown in FIG. 4.

### DETAILED DESCRIPTION OF THE DRAWINGS

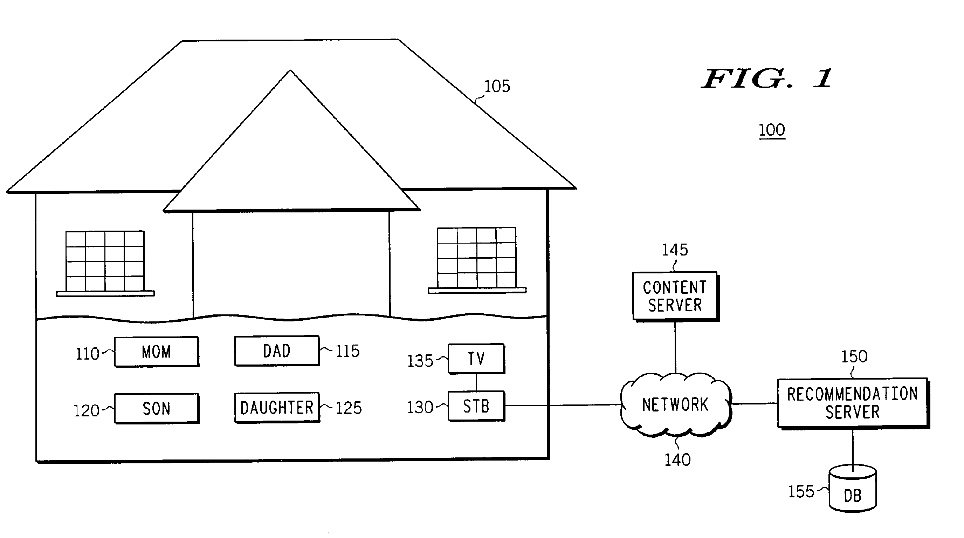

FIG. 1 shows a block diagram of a system 100 that allows a group of users to receive recommendations. System 100 is partially implemented in household 105. Living in household 105 are Mom 110, Dad 115, Son 120 and Daughter 125. In the example shown, all four family members are desirous of receiving some form of multimedia content such as a movie. Once the family members select one movie, it will be received by set-top box 130, processed and rendered on television 135. Set-top box 130 receives the movie from a network 140 that could be a cable network, a satellite network or a wireless network. The selected movie is stored in server 145 or a database coupled to server 145 (not shown).

One issue that arises in system 100 is the selection of the one movie to watch when the four people have different likes and dislikes. To assist the family, recommendation server 150 is also coupled to set-top box 130 through network 140. Coupled to recommendation server 150 is a database 155 storing metadata about movies and preferences and ratings from other users (not shown) of network 140.

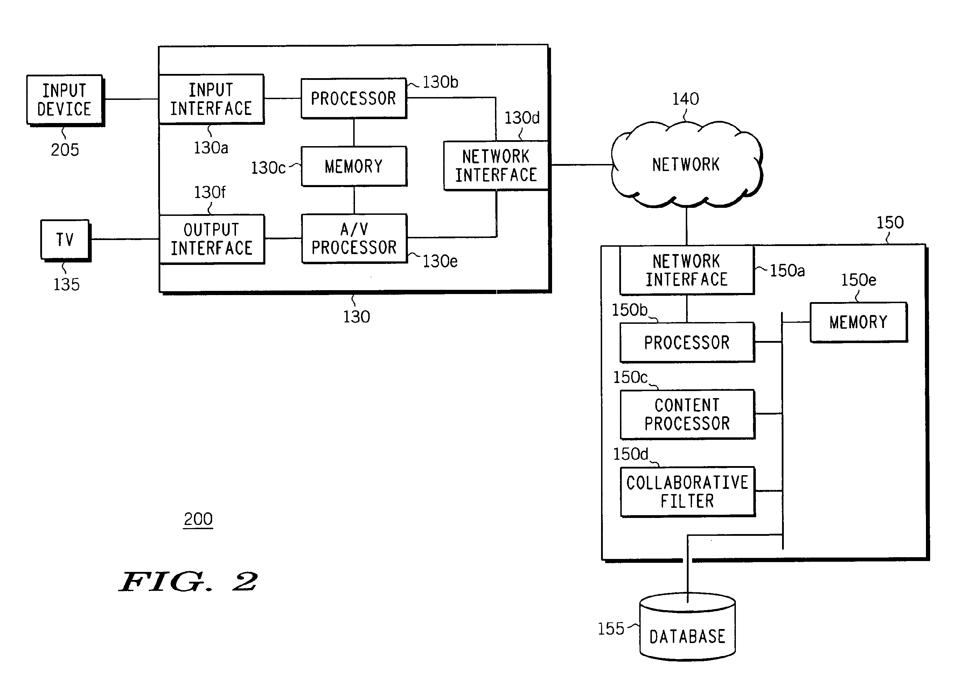

FIG. 2 is a more detailed diagram of system 100 shown in FIG. 1. FIG. 2. includes set-top box 130, television 135, network 140, recommendation server 150 and database 155. Also included in FIG. 2 is input device 205. Input device 205 is typically either a keyboard or a remote control. However, it should be understood that input device 205 could be any device a user uses to enter data into or make selections by set-top box 130.

Input device 205 is coupled to input interface 130a of set-top box 130. Input interface 130a receives the data input by the users via input device 205 and forwards it to processor 130b. Processor 130b is also coupled to memory 130c and network interface 130d. Audio/video processor 130e receives content, such as movies, from network interface 130d, processes it and forwards the audio/video content to output interface 130f. Output interface 130f forwards the audio/video content to television 135. As in FIG. 1, set-top box 130 is coupled to recommendation server 150 via network 140. Recommendation server 150 includes a network interface 150a coupled to network 140. Processor 150b receives data and outputs data to set-top box 130 via network interface 150a and network 140. Also coupled to processor 150b is a content matching processor 150c, a collaborative filter processor 150d and a local memory 150e. Examples of collaborative filers that can be used in server 150 include those described in U.S. Patent No. 6,266,649 to Linden et al. entitled "Collaborative Recommendations Using Item-to-Item Similarity Mappings" and a free collaborative filtering engine called CoFE available at http://eecs.oreganstate.edu/iis/CoFE. Examples of memory 150e include either semiconductor memory such as Flash ROM, RAM or other types of ROM as well as magnetic or optical storage that include various types of disks.

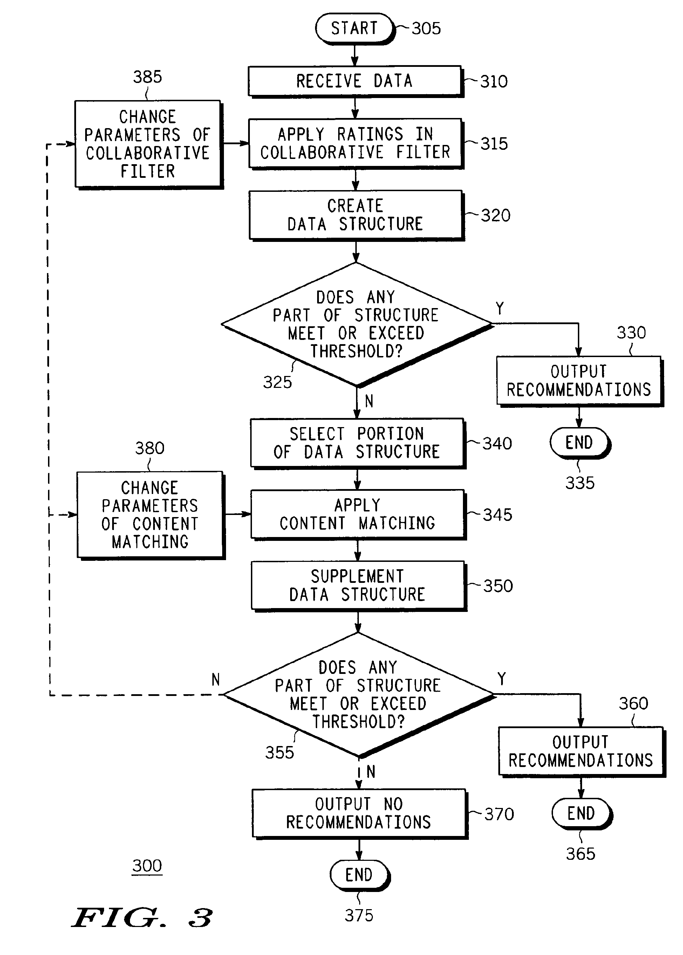

FIG. 3 is a flowchart of a process 300 the system shown in FIGs. 1 and 2 goes through in making recommendations to a group of users. The process begins at step 305. At step 310, recommendation server 150 receives data from set-top box 130. This data may include either a list of the users in the group or ratings profiles for each member of the group, depending on the implementation. If set-top box 130 only sends a list of the users in the group, processor 150b will use that list to retrieve the ratings profiles for each user from database 155.

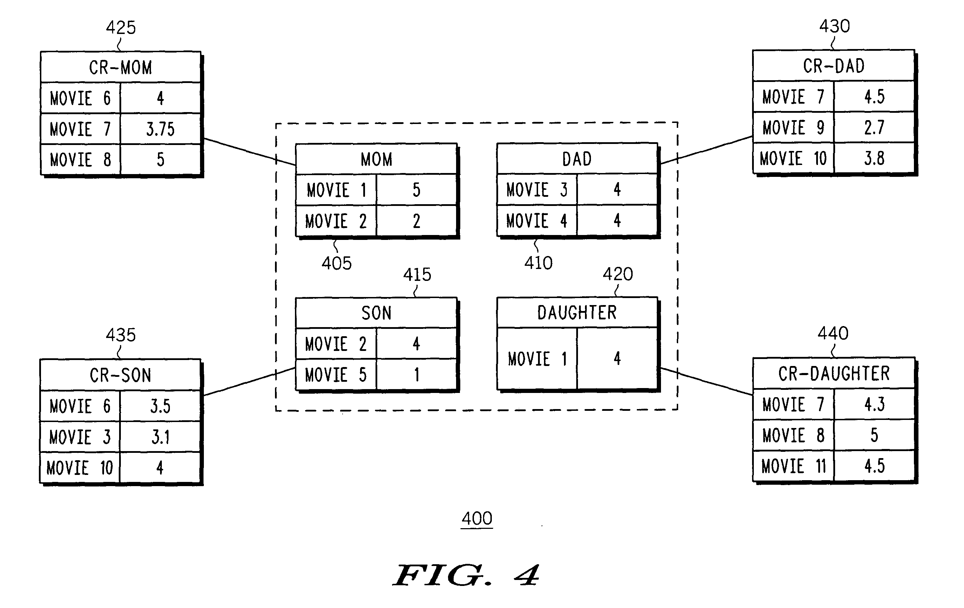

Once recommendation server 150 has the ratings profiles for the group of users, it forwards those profiles to collaborative filter processor 150d to generate collaborative recommendations at step 315. FIG. 4 is a diagram 400 of a group of users' ratings profiles and the collaborative recommendations made based on each profile. The group of ratings profiles can originate from a typical household containing Mom 110, Dad 115, Son 120 and Daughter 125. Mom's ratings profile 405 shows she has rated Movie 1 as a 5 (on a 0 to 5 scale) and Movie 2 as a 2. Similarly, Dad's ratings profile 410 shows he has rated Movie 3 as a 4 and Movie 4 as a 4. Son's ratings profile 415 shows he has rated Movie 2 as a 4 and Movie 5 as a 1. Finally, Daughter's ratings profile 420 shows she has rated Movie 1 as a 4. It should be understood that the group could include more members (e.g., a family of six people) and that each member could have larger rating's profiles (e.g., more ratings points) in addition to a different rating systems, say 1 to 10. Thus, the group of ratings profiles shown in FIG. 4 is merely illustrative.

Collaborative filter 150d takes ratings profiles 405, 410, 415 and 420 and generates recommendations and cumulative ratings for each user. Thus, Mom's ratings profile 405 causes collaborative recommendation profile 425 to be generated from ratings profiles of other users in network 140. Collaborative recommendation profile 425 includes a list of movie titles and their respective collaborative ratings. Mom's collaborative recommendation profile 425 shows Movie 6, which in this example is the title of the movie, is rated as a 4, Movie 7 as a 3.75 and Movie 8 as a 5. Similarly, collaborative filter 150d generates collaborative recommendations 430, 435 and 440, which contain lists of identifiers and their respective ratings, for ratings profiles 410, 415 and 420, respectively. Collaborative recommendation profile 430 shows Movie 7 is a 4.5, Movie 9 is a 2.7 and Movie 10 is a 3.8 based on Dad's ratings profile 410. Collaborative recommendation profile 435 shows Movie 6 is a 3.5, Movie 3 is a 3.1 and Movie 10 is a 4 based on Son's ratings profile 415. Collaborative recommendation profile 440 shows Movie 7 is rated at 4.3, Movie 8 is rated at a 5 and Movie 11 is rated as a 4.5 based on Daughter's ratings profile 420.

Once each collaborative recommendation has been obtained for each user, processor 150b organizes those recommendations into a data structure at step 320. Examples of such data structures include matrices and trees.

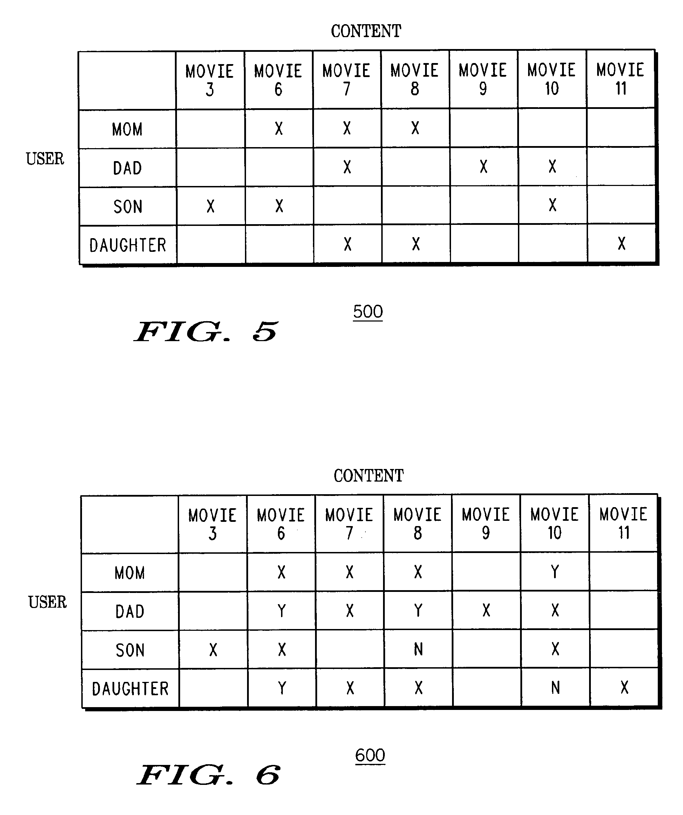

FIG. 5 is an illustrative matrix 500 of all of the collaborative recommendations made to each of the users shown in FIG. 4. In FIG. 5, matrix 500 identifiers, such as titles, are listed along the first row and user identifying data, such as names, are listed along the first column. Matrix 500 is then built by placing an "X" for each piece of content recommended to each user. A threshold criterion can be applied in building the matrix. As an example, if one movie is recommended very low, say a 1, then an "X" may not be placed in the corresponding square.

At step 325, processor 150b then applies a set of rules to the matrix. The first set of rules uses a threshold. This causes processor 150b to look at the number of X's in each column and count them. If the number of X's in a column meets or exceeds that threshold, processor 150b goes to step 330 and recommends those movies in those columns by outputting an identifier such as the title of the movie(s) in those columns. As an example, one rule would be any piece of content that is recommended to three or more users is recommended to the group. Thus, processor 150b determines where the "X's" are in matrix 500 and determines there are three or more "X's" for Movie 7. Thus, processor 150b recommends Movie 7 to the group. The recommendation is sent by processor 150b in a message to set-top box 130 over network 140 telling the group of users the movies it recommends. The message is forwarded to audio/video processor 130e that renders the data into a useful format. This data is then output through output interface 130f to television 135 where the recommendations are displayed to the group. The process then ends at step 335.

In some situations, the first pass threshold rule will not be adequate. For example, if the threshold was one movie being recommended to four users in step 325, no movie would be recommended to the group of users based on data structure 500. When this happens such that the decision from step 325 is "No," processor 150b must further manipulate data structure 500. In method 300, processor 150b determines which part of the matrix 500 should have data added to it at step 340. In one implementation, processor 150b will determine which columns had the most "X's." Referring to FIG. 5, and assuming the column for Movie 7 wasn't there, processor 150b would determine that the columns for Movies 6, 8 and 10 have the most "X's" or hits at step 340. Movies 3, 9 and 11 were not recommended to enough users to merit further processing or consideration.

At step 345, processor 150b forwards preference profiles for the individuals who do not have X's in the selected columns. Since in the example shown in FIG. 5 every user has a blank space in a column containing two or more X's, every user's preference profile is forwarded to content recommendation processor 150c. In addition, processor 150b also forwards the titles or some other identifying data of those movies that have two or more hits associated with them (e.g., Movies 6, 8 and 10). Once content recommendation processor 150c has the relevant data, it performs a content matching algorithm to determine if any of the blank spaces in the matrix can be filled.

FIG. 6 is an example of the matrix 500 that has had data added to if via content recommendation processor 150c and processor 150b to generate matrix 600. Content recommendation processor 150c determines that the three movies can be recommended to three users. Specifically, content recommendation processor 150c recommends Movie 6 to Dad and Daughter, Movie 8 to Dad and Movie 10 to Mom. This is shown in FIG. 6 by the Y's. Content recommendation processor 150c cannot recommend Movie 8 to Son or Movie 10 to Daughter as shown by the N's in the corresponding boxes in matrix 600.

At step 350, processor 150b takes these recommendations and fills in the corresponding boxes into matrix 600. In one implementation, processor 150b takes the Y's and N's from content recommendation processor 150c and inserts them into matrix 500 to build matrix 600.

At step 355, processor 150b then applies the same or different threshold rule as was done in step 325. As an example, if the threshold is still three out of four users, then Movies 6, 8 and 10 can be recommended to the group. If a different threshold is used, say unanimous or four users for the example shown, then only Movie 6 can be recommended. Whatever, the threshold is, if one or more movies have the corresponding recommendations, they are recommended to the group at step 360. This is done by processor 150b forming a message that includes the recommendations that it then forwards through the network interface 150a, over network 140 to set-top box 130. The recommendations are then displayed as previously described. The process then ends at step 365.

If the new matrix 600 does not yield enough results to meet the chosen threshold, processor 150b may proceed in any of a multiple ways as shown by the dotted lines in FIG. 3. In one implementation, processor 150b determines it cannot make any recommendations at step 355 and forwards a message to set-top box 130 at step 370 and the process then ends at step 375.

In an alternative implementation, processor 150b may decide to expand the content matching. In this case, processor 150b instructs content recommendation processor 150c to change its parameters and perform additional content matching searching in step 380. The process then continues at step 345 as previously described.

Alternatively, processor 150b could instruct collaborative filter processor 150d to change its parameters and provide a different set of collaborative recommendations at step 385. The process then continues at step 315 as previously described.

The process shown in FIG 3 may be implemented in a general, multi-purpose or single-purpose processor. Such a processor will execute instructions, either at the assembly, compiled or machine level, to perform the process. Those instructions can be written by one with ordinary skill in the art, following the description of Figures 4, 5, 6 and 7, and stored or transmitted on a computer-readable medium. The instructions may also be created by using a source code or any other known computer-aided design tool. A computer-readable medium may be any medium that is capable of carrying out those instructions and include a CD-ROM, DVD, a magnetic or other optical disc, a tape, a silicon memory, e.g., removable, non-removable, volatile or non-volatile, a packetized or non-packetized wireline or wireless transmission signals.

While the preferred embodiments of the invention have been illustrated and described, it will be clear that the invention is not limited to these embodiments only. Numerous modifications, changes, variations, substitutions and equivalents will be apparent to those skilled in the art, without departing from the spirit and scope of the invention, as described in the claims.

As an example, while the above implementations were describing delivering recommendations for movies, other items for consumption may be recommended. Examples include restaurants, books for a book club, magazines, theater productions, music CDs, video games or night clubs. In some instances, the members of the group do not have to be associated with a household. Thus multiple users in different locations or households could be recommended the same movie(s) and watch them in their own homes.

Also, while the recommendation engines were shown in server 150, another implementation may split the processing done between the set top box 130 and server 150. For instance, set top box 130 could perform the content matching algorithm on results received from the collaborative filter 150d in server 150. In yet another modification, the three processors 150b, 150c and 150d could be integrated into one processor that performs all three functions.

Finally, the described processes and methods do not require either a server or a set-top box. The methods could be implemented in a personal computer, a personal digital assistant, a mobile radiotelephone or a laptop computer.

## Claims

1. A method for making a recommendation to a group of users comprised of a first user and a second user wherein the method comprises:
generating a first set of collaborative recommendations from a collaborative filtering algorithm for the first user wherein the first set of collaborative recommendations includes a first list of identifiers of goods or services;
generating a second set of collaborative recommendations from the collaborative filtering algorithm for the second user wherein the second set of collaborative recommendations includes a second list of identifiers of goods or services;
evaluating the first and second sets of collaborative recommendations to determine if a first threshold condition is met;
if the first threshold condition is not met;
selecting a first portion of the first set of collaborative recommendations; and
generating a first set of content matched recommendations from a content matching algorithm for the first user based on at least one identifier from the second list of identifiers of goods and services.

2. The method of claim 1 further comprising:
if the first threshold condition is not met:
modifying the first list based on the first set of content matched recommendations;
evaluating the modified first list to determine if a second threshold condition is met; and
generating a first recommendation message that includes at least one identifier from the modified first list if the second threshold condition is met.

3. The method of claim 2 further comprising:
if the second threshold condition is not met:
selecting a second portion of the second set of collaborative recommendations; and
generating a second set of content matched recommendations from the content matching algorithm for the second user based on at least one identifier from the first list of identifiers of goods and services.

4. The method of claim 3 further comprising:
if the first threshold condition is not met:
modifying the second list based on the second set of content matched recommendations;
evaluating the modified second list to determine if a third threshold condition is met; and
generating a second recommendation message that includes at least one identifier from the modified second list if the third threshold condition is met.

5. The method of claim 1 wherein evaluating the first and second sets of collaborative recommendations comprises:
creating a data structure comprised of the first and second sets of lists.

6. The method of claim 5 wherein evaluating the modified first and second sets of collaborative recommendations further comprises:
adding data to a data structure comprised of the first and second sets of collaborative recommendations.
